# EUROPÄISCHE PATENTSCHRIFT

(11) **EP 0 697 822 B1**
(45) Veröffentlichungstag und Bekanntmachung des Hinweises auf die Patenterteilung: **28.01.1998**
(21) Anmeldenummer: 94915092.4
(22) Anmeldetag: 22.04.1994
(51) Int. Cl.: A23N 12/12

(54) **VORRICHTUNG ZUR ERMITTLUNG VON BEDINGUNGEN BEIM RÖSTEN VON ÖLSAMEN**
DEVICE FOR DETERMINING THE CONDITIONS DURING THE ROASTING OF OILSEED
DISPOSITIF PERMETTANT DE DETERMINER LES CONDITIONS LORS DU PROCESSUS DE GRILLAGE DE GRAINES OLEAGINEUSES

(30) Priorität: 04.05.1993 DE 4314606
(43) Veröffentlichungstag der Anmeldung: 28.02.1996
(73) Patentinhaber: MASCHINENFABRIK G.W. BARTH LUDWIGSBURG GMBH & CO., D-71691 Freiberg (DE)
(72) Erfinder: ESCHER-STUDER, Felix, CH-8607 Aathal-Seegräben (CH); KÜNZLI, Roland, CH-8049 Zürich (CH); PERREN, Rainer, CH-6022 Grosswangen (CH); MAYER-POTSCHAK, Karl, D-71638 Ludwigsburg (DE)
(74) Vertreter: Jeck, Anton, Dipl.-Ing.
(86) Internationale Anmeldenummer: EP9401255
(87) Internationale Veröffentlichungsnummer: WO9424891

(56) Entgegenhaltungen:
- DE-A- 3 010 558
- DR.-ING. H. CLEVE UND DIPL.-ING. H.J. HOFFMANN: "Temperaturmessung im Getreidekorn" DIE MÜLLEREI, Bd. 2, Nr. 28, 1952, BRAUNSCHWEIG, Seiten 56-62, XP002048366
- D.M. BRUCE; R.A. SYKES: "Apparatus for determining mass transfer coefficients at high temperatures for exposed particulate crops, with initial results for wheat and hops" JOURNAL OF AGRICULTURAL ENGINEERING RESEARCH, Nr. 28, 1983, Seiten 385-400, XP002048367
- DATABASE WPI Week 9223 Derwent Publications Ltd., London, GB; AN 93-018421 XP002048368 & ZA 9 105 864 A (JACOBONE PTY LTD) , 29.April 1992
- DATABASE WPI Week 9205 Derwent Publications Ltd., London, GB; AN 92-039533 XP002048369 & SU 1 631 066 A (MOSC FATS COMBINE) , 28.Februar 1991

## Beschreibung

Die Erfindung betrifft eine Vorrichtung zur Ermittlung optimaler Einzelnuß- und Haufenröstbedingungen bei Ölsamen mit einem Röstraum.

Ölsamen, wie z.B. Haselnüsse, Mandeln oder Erdnüsse, werden zum größten Teil zur Aromaveredelung geröstet, wobei sich ein komplexes Gemisch aus über 200 verschiedenen Stoffen bildet, die mehr oder weniger zum Gesamtaroma beitragen. Abgesehen von der sogenannten Naßröstung, die in heißem Fett durchgeführt wird und nur für Erdnüsse eine gewise Bedeutung hat, werden Ölsamen im Trockenverfahren gröstet. Diese Trockenröstung kann nach verschiedenen Varianten durchgeführt werden, die sich hauptsächlich darin unterscheiden, wie die thermische Energie auf das Röstgut übertragen wird (Konduktion - direkter Kontakt des Röstgutes mit heißen Flächen; Konvektion - Wärmeübertragung durch Heißluft; Strahlung - Wärmeübertragung durch Strahlung geeigneter Wellenlänge). Konduktiv und konvektiv arbeitende Röster werden seit langer Zeit betrieben und sind durch mehr oder weniger empirisch gewonnene Erkenntnisse beherrschbar im Hinblick auf Produktqualität und -stabilität. Andererseits ist bekannt, daß Ölsamen Fette mit höheren Anteilen mehrfach ungesättigter Fettsäuren enthalten und gegen oxydativen Verderb (Ranzidität) empfindlich sind. Daher ist es erforderlich, möglichst genaue Kenntnisse darüber zu haben, wie sich die einzelnen Ölsamen bei unterschiedlichen Röstbedingungen verhalten, das heißt bei unterschiedlichem Volumen des Röstraumes, unterschiedlichen Luftströmungen der Heißluft und der im Röstraum herrschenden Temperatur. Dieses Verhalten der Ölsamen wurde bislang empirisch ermittelt, was zum einen zeitaufwendig ist und zum anderen zu erheblichen Ungenauigkeiten führt, da die Nüsse während des Röstverfahrens, insbesondere in bezug auf die Temperatur, unterschiedlichen Bedingungen ausgesetzt sind, und zwar vor allem dann, wenn sie im Röstraum mit erheblichem Volumen geröstet werden.

Schließlich geht aus der Druckschrift "Temperaturmessung im Getreidekorn" in "die Müllerei" 2 (1952), Seite 57 - 62, hervor, daß die Innentemperatur eines Getreidekorns durch ein Thermoelement und die Oberflächentemperatur mittels Thermoarme zu messen ist. Dabei wurde die Eindringung der Wärme in das einzelne Korn bei unterschiedlicher erwärmter Luft konstanter Geschwindigkeiten untersucht. Eine Simulation des Röstprozesses, wobei eine Schwingung der Samen ermöglicht wird, sowie unterschiedliche Lufttemperaturen und -geschwindigkeiten und die Temperatur der Samen in zwei unterschiedlichen Tiefen erfaßt werden können, geht aus diesem Stand der Technik jedoch nicht hervor.

Ausgehend von dem obigen Stand der Technik liegt der Erfindung die Aufgabe zugrunde, hier Abhilfe zu schaffen und eine Vorrichtung vorzuschlagen, mit der das Verhalten der Nüsse bei unterschiedlichen Röstbedingungen besonders schnell und einfach festgestellt werden kann.

Die gestellte Aufgabe wird erfindungsgemäß durch die Merkmale des Anspruches 1 gelöst.

Man erkennt, daß die Erfindung jedenfalls dann verwirklicht ist, wenn es sich um eine Vorrichtung handelt, bei der an einzelnen Nüssen und bei Haufensystemen eine Prozeßanalyse durchführbar ist, wobei bei den Nüssen der Verlauf der Innentemperaur, des Wassergehalts, des Gesamtgewichtsverlustes, des Röstgrades und der Bräunung festgehalten und modelliert werden kann. Dieses Modell wird anschließend auf die Kinetik von Oxydationsreaktionen und die Bildung von Aromastoffen erweitert. Das kinetische Modell der Nuß-Röstung beschreibt nach einer Verifizierung die verfahrenstechnischen und technologischen Anforderungen an einen Nußröster und unterstützt die Maßstabsvergrößerung bei der Entwicklung eines Rösters. Der Röstprozeß wird bezüglich der Haltbarkeit und Aromaqualität unter Berücksichtigung der Veränderung der mikroskopischen Struktur und der Textur optimiert. Daraus wird eine Röstvorschrift erhalten, die entsprechend nach einer Uberprüfung Nüsse mit optimierter Haltbarkeit und Aromaqualität ergibt. Die ermittelten Ergebnisse fließen unverzüglich in die Prozeßentwicklung und Konstruktionsplanung ein, um die schnelle Implementierung in einen industriellen Röstprozeß zu erreichen. Anhand von Röstungen auf großtechnischen Anlagen kann der Einfluß der Prozeßführung auf die Haltbarkeit und die Qualität der gerosteten Nüsse verifiziert werden.

Weitere zweckmäßige und vorteilhafte Ausgestaltungen der Erfindung gehen aus den Unteransprüchen hervor.

Eine besonders zweckmäßige Ausgestaltung sieht vor, daß die Thermoelemente in unterschiedlichen Bereichen des Röstraumes angeordnet sind, wobei erfindungsgemäß, die Thermoelemente als drahtförmige und elastisch verformbare Körper ausgebildet sind, die die Temperatur der Nuß im Bereich der stirnseitigen Stoßseite des Thermoelementes und der Nuß messen. Hierbei werden Thermoelemente gewählt, die die Temperatur nur im Bereich deren freien Stirnseiten messen.

Eine weitere zweckmäßige Ausgestaltung sieht vor, daß jede gemessene Nuß von mindestens zwei Thermoelementen getragen wird, wobei jedes Thermoelement einen spiralförmigen Abschnitt aufweist. Vorteilhaft werden Thermoelemente eingesetzt, bei denen der Durchmesser des aktiven Abschnittes kleiner als 1 mm ist.

Ein Ausführungsbeispiel der Erfindung ist in der Zeichnung schematisch dargestellt und wird im folgenden näher erläutert.
Es zeigen
- Fig. 1: ein Fließschema eines Rösters,
- Fig. 2: einen Einzelnußrösteraufsatz in Draufsicht,
- Fig. 3: einen Haufenrösteraufsatz in Seitenansicht und
- Fig. 4 bis Fig. 7: Temperaturverlauf, Verlauf des Gesamtgewichtsverlusts und des Verlusts an konstitutionellem Wasser bei der Röstung von Haselnüssen bei 250 °C, 200 °C, 150 °C und 120 °C.

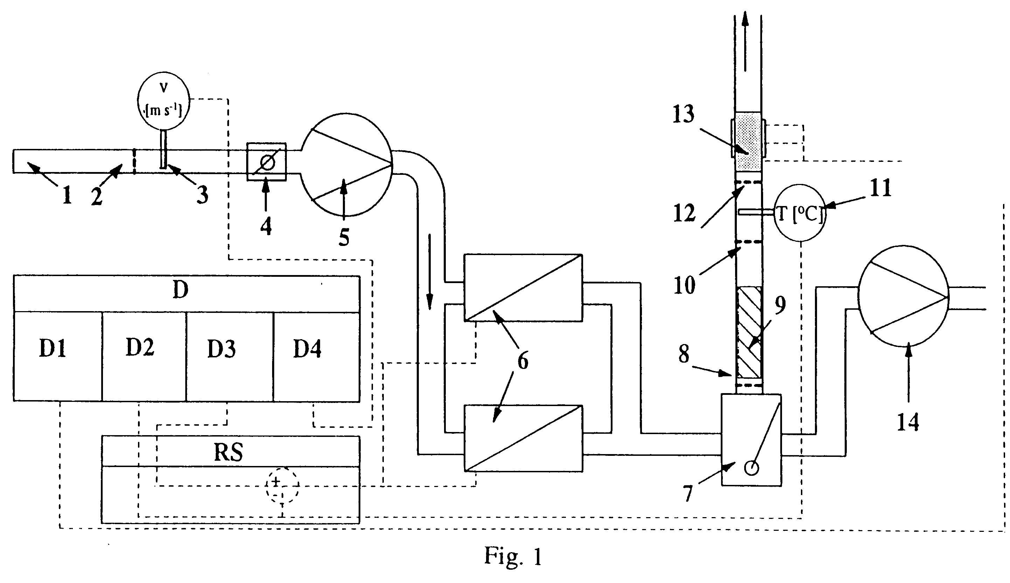

In Fig. 1 ist ein Röstsystem zur Durchführung von Einzelnuß- und Haufenröstungen dargestellt, mit dem die Haselnüsse unter kontrollierten und bekannten Prozeßbedingungen geröstet werden können und die Temperatur in den Haselnüssen verfolgt werden kann. Der Röster ist hierbei an eine Datenerfassung D angeschlossen. Ferner umfaßt der Röster auch eine Röster-Steuerung RS. Die Datenerfassung besteht aus mehreren Einheiten, nämlich aus der Einheit D1 zur Erfassung der Haselnuß-Temperatur, der Einheit D2 zur Erfassung des Heißluft-Temperatur-Istwertes, der Einheit D3 zur Vorgabe des Heißluft-Temperatur-Sollwertes und der Einheit D4 zur Erfassung der Kaltluftgeschwindigkeit.

Ferner besteht der Röster aus einem Ansaugstutzen 1 mit einem Gleichrichter 2 und einer Meßstelle 3 für die Luftgeschwindigkeit. An den Ansaugstutzen schließen sich ein Schieber 4 und ein Axialventilator 5 an, der die beiden Lufterhitzer 6 über Leitungen mit Luft versorgt. Die so erwärmte Luft wird sodann einem Verteiler 7 mit einer Umschaltklappe zugeführt. Je nach Stellung der Umschaltklappe kann die Heißluft über ein Sieb 8, einen statischen Gleichrichter 9, einem Gleichrichter 10 und ein Sieb 12 dem Röstraum 13 zugeführt. In einer anderen Position der Umschaltklappe wird die Luft über den Kühlventilator 14 nach außen befördert. Die Temperatur der Luft, mit der der Röstraum 13 beaufschlagt wird, wird im Bereich 11 gemessen.

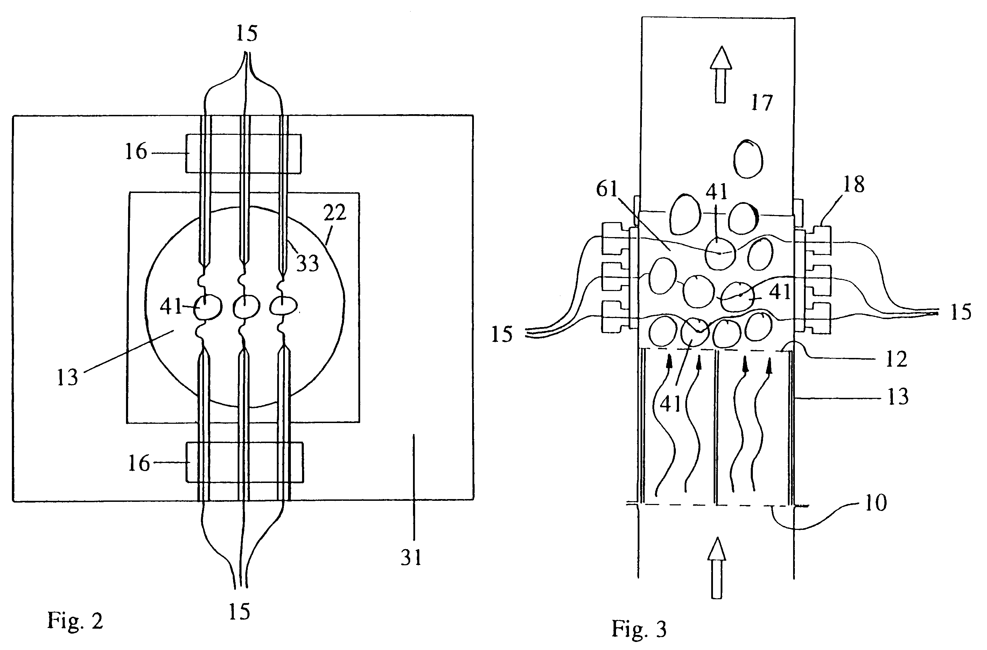

Der Röster arbeitet als Wirbelschichtröster, kann aber für den Einsatz von IR-Strahlern zu einem vibrierenden Fließbett umgerüstet werden. Eine Absaugung von losen Schalenteilchen sorgt beim Einsatz von IR-Strahlern für die notwendige Betriebssicherheit. Der Röstprozeß kann mit der Vorgabe von externen Temperatur-Sollwerten gesteuert werden, was das Rösten mit beliebigen Temperaturprofilen ermöglicht. Die gleichzeitige Erfassung von Haselnuß-Innentemperaturen mit mehreren Thermoelementen (Fig. 2 und 3), von Heißlufttemperatur-Istwert und von Kaltluftgeschwindigkeit erlaubt eine genaue Bestimmung der angewandten Röstbedingungen.

In Fig. 2 ist ein Meßtisch 31 zur Befestigung von drei Haselnüssen 41 an Thermoelementen 15, die über ein Röstrohr 22 gelegt werden können, dargestellt. Das Röstrohr 22 weist 6 Kerben für den Einsatz der Thermoelemente 15 auf. Durchbohrte Teflonstäbe 33, die der Führung und Halterung der Thermoelemente 15 dienen, greifen in das Röstrohr 22 gerade ein. Die Thermoelemente 15 sind somit in unterschiedlichen Bereichen des Röstraumes angeordnet und als drahtförmige und elastisch verformbare Körper ausgebildet, die die Temperatur der jeweiligen Nuß 41 im Bereich der freien Stoßseite des Thermoelementes 15 und der Nuß 41 messen. Jede Nuß ist von zwei Thermoelementen 15 getragen, von denen das jeweils eine Thermoelement etwa in die Mitte der jeweiligen Nuß 41 eingreift, während das jeweils zweite Thermoelement im Oberflächenbereich der jeweiligen Nuß 41 angeordnet ist. Der Durchmesser des aktiven Abschnittes des Thermoelementes 15 ist kleiner als 1 mm. Ferner ist zu erkennen, daß jedes Thermoelement 15 eine spiralförmige Partie aufweist, so daß die Nüsse 41 Schwingungen ausüben können. Die Thermoelemente 15 sowie die Teflonstäbe 33 sind auf dem Meßtisch 31 durch Befestigungen 16 festgehalten. Die aufgeheizte Luft strömt hierbei in Achsrichtung des Röstrohres 22 und umspült die Nüsse 41.

In Fig. 3 ist ein Haufen-Röstaufsatz dargestellt, in dem mehrere Thermoelemente 15 mit mehreren Nüssen 41 angeordnet sind. Die Heizluftzufuhr bzw. -ableitung erfolgt in Richtung des Pfeiles, wobei die Heizluft zunächst den Gleichrichter 10 sowie das Sieb 12 passiert und den Aufsatz 13 durchströmt. Die in der Wirbelschicht-Röstzone 61 angeordneten und von den Thermoelementen 15 getragenen Nüsse üben Schwingbewegungen aus und repräsentieren Nüsse, die in unterschiedlichen Bereichen der Röstzone 61 angeordnet sind. Die Thermoelemente 15 sind von Thermoelement-Klemmen 18 getragen. Oberhalb der Röstzone 61 ist ein Schauglas 17 zur Kontrolle der Nüsse angeordnet.

Bei der Durchführung der Experimente werden vorzugsweise Nüsse mit definierter Größe und definiertem Gewicht gewählt und zuvormit einem Bohrer angebohrt, dessen Durchmesser geringfügig kleiner ist als der Durchmesser der Thermoelemente. Daraufhin werden die Thermoelemente mit den Nüssen verbunden, wobei deren Stirnseiten mit Bezug auf die Oberfläche der Nüsse in unterschiedlichen Tiefen angeordnet sind. Schließlich wird der Röster eingeschaltet und die Nüsse werden mit vorgegebener Temperatur defininierte Zeit mit Heißluft beaufschlagt. Die durch die Thermoelemente festgestellten Meßergebnisse werden erfaßt und ausgewertet.

Optimale Meßbedingungen sind z.B. dann vorhanden, wenn die ausgewählten Müsse mit einer Vielzahl von Thermoelementen versehen sind, die minimale Abmessungen aufweisen und mit der Datenerfassung drahtlos verbunden sind. Die Datenübertragung könnte durch Elekromagnetische Wellen erfolgen. Somit könnten die Referenz-Nüsse die gleichen chaotischen Bewegungen ausüben wie die keine Thermoelemente aufweisenden Nüsse.

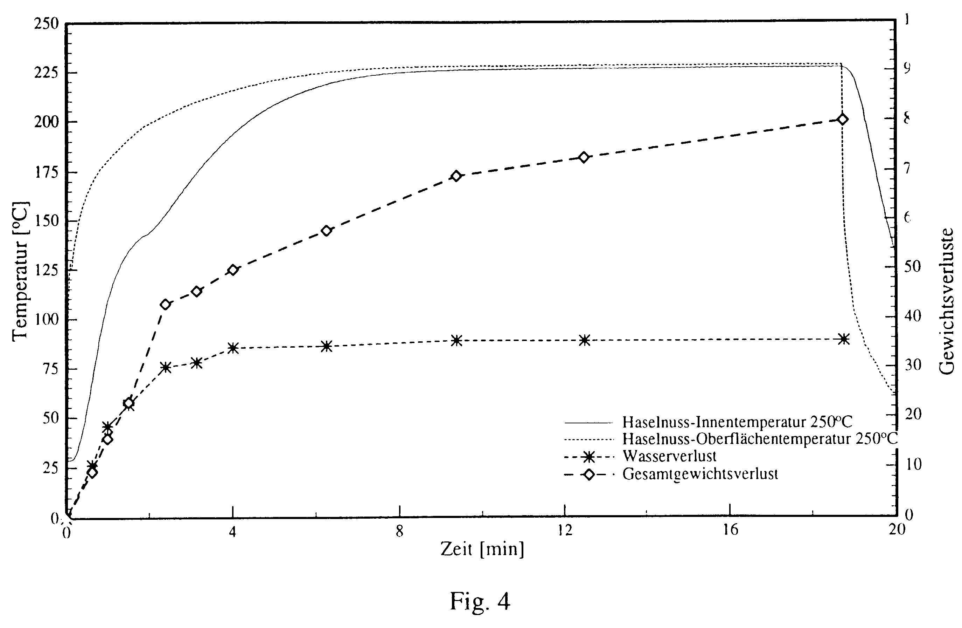

In den Figuren 4 bis 7 sind Ergebnisse von isothermen Röstungen an einzelnen Haselnüssen dargestellt. Hierbei wurden je drei türkische Haselnüsse der Provenienz Akcakoka, Ernte 1991, bei 120 °C, 150 °C, 200 °C und 250 °C mit dem in Fig. 1 dargestellten Röster in einem Luftvolumenstrom von 1,5 m³ min⁻¹ geröstet. Die Temperaturen in der Haselnußmitte und 1,1 mm unter deren Oberfläche wurden mit den Thermoelementen 15 mit einem Durchmesser von 0,25 mm aufgezeichnet. Nach der Röstung wurden der Gesamtgewichtsverlust während der Röstung und der Wassergehalt bestimmt.

Die Röstung bei 250 °C führte zu einem äußerst schnellen Anstieg der Temperatur im Bereich der Oberfläche und der Haselnuß-Innentemperatur (vgl. Fig. 4). Die maximale Temperaturdifferenz der beiden Temperaturmessungen betrug 125 °C. Bei einer Haselnuß-Innentemperatur von 125 °C verlangsamten sich vorübergehend die innere und die äußere Aufheizrate unterschiedlich. Die innere Aufheizrate stieg anschließend wieder an. Der Verlauf des Gesamtgewichtsverlusts trennte sich während der Verzögerung der inneren Aufheizrate vom Verlauf des Wassergehaltes. Nach vier Minuten war das gesamte konstitutionelle Wasser der Haselnuß, nämlich 4,25 g 100 g⁻¹, verdampft. Die Gesamtgewichtsverlustrate verlangsamte sich mit der Röstdauer, jedoch wurde auch nach 19 Minuten kein stabiler Zustand erreicht.

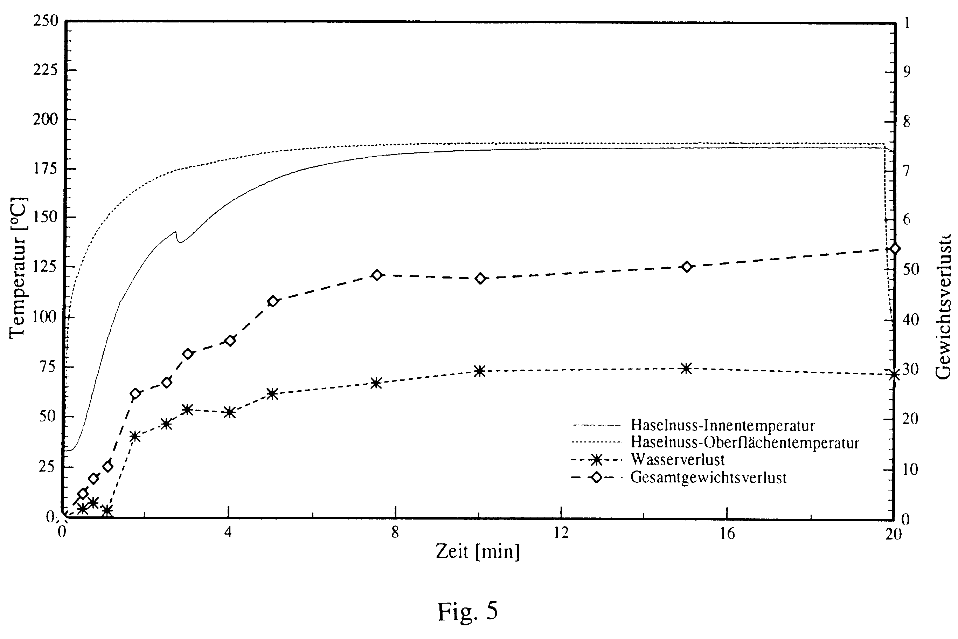

Die Röstung bei 200 °C zeigte ebenfalls eine charakteristische Verzögerung der Aufheizrate bei 125 °C (vgl. Fig. 5). Die Verdampfung des konstitutionellen Wassers verlief langsamer und stabilisierte sich nach 4 Minuten auf einem höheren Wassergehalt als bei 250 °C.

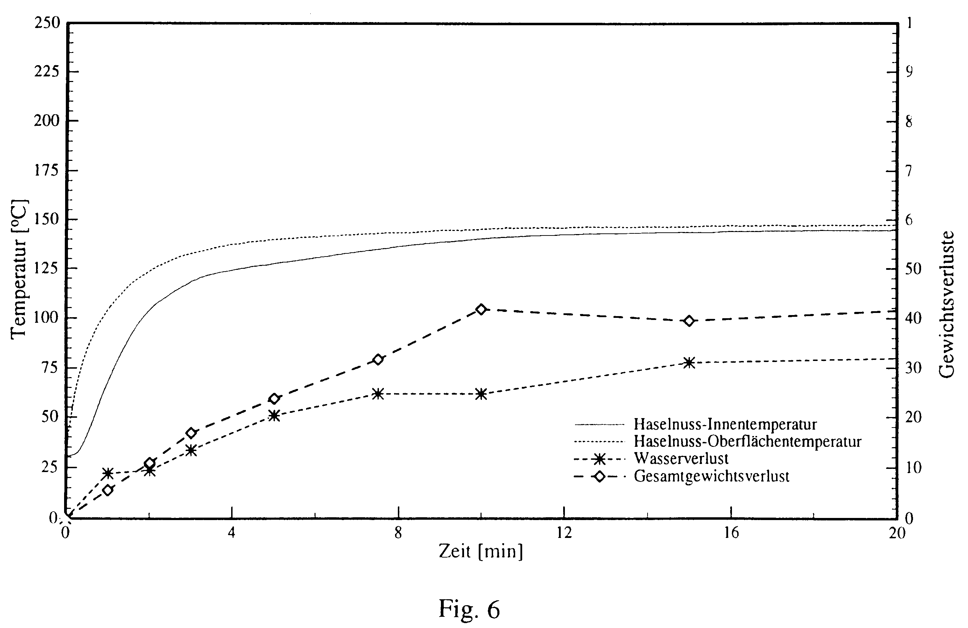

Die Röstung bei 150 °C zeigte nur eine leichte Verzögerung der Aufheizrate bei 130 °C (vgl. Fig. 6). Entsprechend geringer war der Unterschied zwischen Gesamtgewichtsverlust und Verlust an konstitutionellem Wasser.

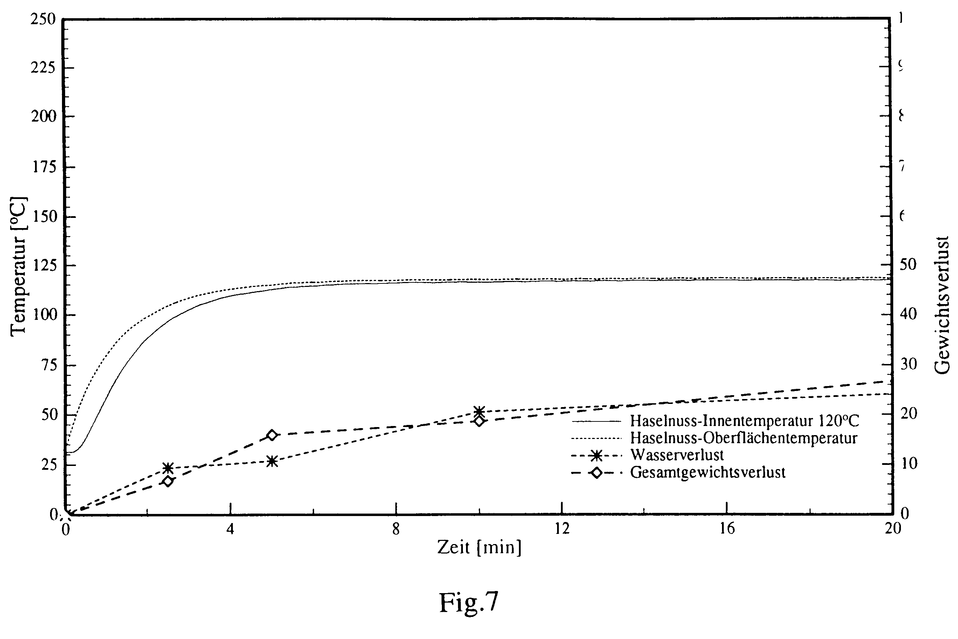

Fig. 7 läßt erkennen, daß bei dieser Röstung keine Verlangsamung der Aufheizrate beobachtet werden konnte. Die maximale Temperaturdifferenz zwischen der Temperatur im Oberflächenbereich und der Innentemperatur betrug 25 °C. Der Verlauf von Gesamtgewichtsverlust und Verlust an konstitutionellem Wasser verlief nahezu parallel.

Zusammenfassend kann folgendes festgestellt werden:

Mit Einzelnuß-Röstungen bei verschiedenen Temperaturen wurden die Temperatur-Wassergehalts- und Gesamtgewichtsverläufe der Haselnüsse untersucht. Unter isothermen Röstbedingungen zeigten die Haselnüsse bei verschiedenen Temperaturen unterschiedliche Temperaturverläufe. Die Verlangsamung der Aufheizrate bei Temperaturen über 150 °C wurde durch eine endotherme Reaktion verursacht, gleichzeitig Stieg die Gesamtgewichtsverlustrate stark an.

Die vorgeschlagene Vorrichtung kann genauso bei Kakao- oder Kaffeebohnen verwendet werden.

## Patentansprüche

1. Vorrichtung zur Durchführung von Prozeßanalysen, Simulationen des Röstprozesses und Ermittlung optimaler Einzelnuß- und Haufenröstbedingungen bei Ölsamen mit einem Röstraum (13), bei der zum Zwecke der Ermittlung des Einflusses von Temperatur und Geschwindigkeit der die Ölsamen beaufschlagenden Luft im Röstraum (13) mindestens einer Nuß (41) mit ihr betrieblich verbindbare und die Innentemperatur der Nuß (41) in mindestens zwei unterschiedlichen Abständen von ihrer Oberfläche messende Thermoelemente (15) zugeordnet und an eine Datenerfassungseinheit (D1) angeschlossen sind, bei der eine Vorrichtung zum Erfassen der genannten Parameter der beaufschlagenden Luft vorgesehen ist und bei der die Thermoelemente (15) als drahtförmige und elastisch verformbare Körper ausgebildet sind, die die Temperatur der Nuß (41) im Bereich der freien Stoßseite des Thermoelementes (15) und der Nuß (41) messen.

2. Vorrichtung nach Anspruch 1,
dadurch gekennzeichnet,
daß die Thermoelemente (15) in unterschiedlichen Bereichen des Röstraumes (13) angeordnet sind.

3. Vorrichtung nach einem der Ansprüche 1 oder 2,
dadurch gekennzeichnet,
daß jede Nuß (41) von mindestens zwei Thermoelementen (15) getragen ist.

4. Vorrichtung nach einem der Ansprüche 1 bis 4,
dadurch gekennzeichnet,
daß ein Abschnitt des jeweiligen Thermoelementes (15) spiralförmig ausgebildet ist.

5. Vorrichtung nach einem der Ansprüche 1 bis 5,
daß der Durchmesser des aktiven Abschnittes des Thermoelementes (15) kleiner als 1 mm ist.

## Claims

1. Apparatus for accomplishing process analyses, simulations of the roasting process and the determination of optimum individual nut and mass roasting conditions for oil seeds, including a roasting chamber (13), wherein, for the purpose of determining the influence of the temperature and speed of the air in the roasting chamber (13) acting on the oil seeds, thermocouples (15) are associated with at least one nut (41) and communicate with a data acquiring unit (D1), said thermocouples being operationally connectable to said nut and measuring the internal temperature of the nut (41) at at least two different spacings from its surface, wherein an apparatus for acquiring said parameters of the impinging air is provided, and wherein the thermocouples (15) are configured as wire-shaped and resiliently deformable bodies which measure the temperature of the nut (41) in the region of the free abutment side of the thermocouple (15) and of the nut (41).

2. Apparatus according to claim 1, characterised in that the thermocouples (15) are disposed in different regions of the roasting chamber (13).

3. Apparatus according to one of claims 1 or 2, characterised in that each nut (41) is carried by at least two thermocouples (15).

4. Apparatus according to one of claims 1 to 3, characterised in that a portion of the respective thermocouple (15) has a helical configuration.

5. Apparatus according to one of claims 1 to 4, characterised in that the diameter of the active portion of the thermocouple (15) is smaller than 1 mm.

## Revendications

1. Dispositif pour l'exécution d'analyses de processus, de simulations du processus de grillage et pour la détermination de conditions de grillage optimales de graines ou noisettes oléagineuses individuelles ou en tas, avec une chambre de grillage (13), dispositif dans lequel, aux fins de déterminer l'influence de la température et de la vitesse de circulation de l'air agissant sur les graines oléagineuses dans la chambre de grillage (13), il est associé des thermocouples de mesure (15) raccordés à une unité de saisie de données (D1) à au moins une graine ou noisette (41) à au moins deux distances différentes de sa surface, cette unité de saisie comprenant un dispositif pour la saisie desdits paramètres de l'air et dans lequel les thermocouples (15) ont la forme d'organes filiformes et élastiquement déformables, qui mesurent la température de la graine ou noisette (41) dans la zone de butée libre du thermocouple (15) et de la graine ou noisette (41).

2. Dispositif suivant la revendication 1,
caractérisé
en ce que les thermocouples (15) sont disposés dans des zones différentes de la chambre de grillage (13).

3. Dispositif suivant une des revendications 1 ou 2,
caractérisé
en ce que chaque graine ou noisette (41) est portée par au moins deux thermocouples (15).

4. Dispositif suivant l'une quelconque des revendications de 1 à 3,
caractérisé
en ce qu'un tronçon du thermocouple (15) en question est en forme de spirale.

5. Dispositif suivant l'une quelconque des revendications de 1 à 4, caractérisé en ce que le diamètre du tronçon actif du thermocouple (15) est inférieur à 1 mm.
